# EUROPÄISCHE PATENTSCHRIFT

(11) **EP 3 717 327 B1**
(45) Veröffentlichungstag und Bekanntmachung des Hinweises auf die Patenterteilung: **10.01.2024**
(21) Anmeldenummer: 18811720.4
(22) Anmeldetag: 12.11.2018
(51) Int. Cl.: B60W 50/14, B60W 30/18

(54) **VERFAHREN UND VORRICHTUNG ZUM ANZEIGEN EINER DURCHFÜHRBARKEIT EINES ZUMINDEST TEILWEISE AUTOMATISCH DURCHFÜHRBAREN FAHRMANÖVERS IN EINEM FAHRZEUG**
METHOD AND DEVICE FOR DISPLAYING A FEASIBILITY OF AN AT LEAST SEMI-AUTOMATICALLY EXECUTABLE DRIVING MANEUVER IN A VEHICLE
PROCÉDÉ ET DISPOSITIF POUR AFFICHER UNE APTITUDE À L'EXÉCUTION D'UNE MAN OEUVRE DE CONDUITE QUI PEUT ÊTRE EXÉCUTÉE AU MOINS PARTIELLEMENT AUTOMATIQUEMENT DANS UN VÉHICULE

(30) Priorität: 30.11.2017 DE 102017221619
(43) Veröffentlichungstag der Anmeldung: 07.10.2020
(73) Patentinhaber: Volkswagen Aktiengesellschaft, 38440 Wolfsburg (DE)
(72) Erfinder: BAUMGARTEN, Jens, 10115 Berlin (DE); HAN, Kyoung Sun, 14195 Berlin (DE); MICHAELIS, Jörn, 10785 Berlin (DE)
(86) Internationale Anmeldenummer: PCT/EP2018/080978
(87) Internationale Veröffentlichungsnummer: WO 2019/105728

(56) Entgegenhaltungen:
- EP-A1- 3 196 861
- DE-A1-102009 010 121
- DE-A1-102011 121 948
- DE-A1-102013 008 357
- DE-A1-102015 015 672

## Beschreibung

Die Erfindung betrifft ein Verfahren zum Anzeigen einer Durchführbarkeit zumindest teilweise automatisch durchführbaren Fahrmanövers in einem Fahrzeug. Ferner betrifft die Erfindung eine Vorrichtung zum Anzeigen einer Durchführbarkeit eines zumindest teilweise automatisch durchführbaren Fahrmanövers in einem Fahrzeug.

Bei zumindest teilweise autonom fahrenden Fahrzeugen können Fahrmanöver automatisch vom Fahrzeug selbst durchgeführt werden. Soll ein Fahrmanöver durchgeführt werden, ist für die Fahrzeuginsassen in der Regel nicht ersichtlich, ob dieses bei der momentanen Fahrzeugposition überhaupt durchgeführt werden kann. Kann ein Fahrmanöver aufgrund äußerer Einflüsse wie gesetzlicher Verbote oder bestehender Gefahren durch Objekte nicht durchgeführt werden, kann es bei den Fahrzeuginsassen zu einer Irritation führen, wenn die zugehörige Funktion zwar aktiviert ist, das Fahrmanöver, wie z.B. ein Spurwechsel, jedoch nicht durchgeführt wird.

Die DE 10 2011 121 948 A offenbart ein Verfahren zum Informieren eines Kraftfahrzeugführers über ein mittels eines Fahrerassistenzsystems geplanten und vom Kraftfahrzeug durchgeführten Fahrmanövers.

Die DE 10 2015 015 672 A offenbart ein Verfahren zur Darstellung einer Totwinkelwarnung für ein Fahrzeug.

Die DE 10 2009 010 121 A offenbart ein Verfahren und eine Vorrichtung zur Darstellung von fahrzeugrelevanten Informationen in einem Kraftfahrzeug.

Die EP 3 196 861 offenbart ein Verfahren zum Bereitstellen einer Spurwechselassistenzformation für den Fahrer eines Fahrzeuges.

Die DE 103 43 199 A1 beschreibt ein Verfahren zur Informationsanzeige eines Fahrerassistenzsystems. Dabei wird insbesondere der Funktionsstatus eines Fahrerassistenzsystems im aktivierten Zustand angezeigt.

Weiterhin beschreibt die DE 10 2011 082 398 A1 ein Verfahren zur Nutzung eines Fahrerassistenzsystems. Hierbei wird plausibilisiert, ob die Funktionsfähigkeit eines bestimmten Fahrerassistenzsystems gewährleistet ist. Hierzu werden insbesondere Informationen über die Umgebung des Fahrzeugs, wie z.B. Verkehrsdichte, Wetter oder Fahrgeschwindigkeit erfasst. Es kann dann angezeigt werden, auf welchen Streckenabschnitten einer Route das Fahrerassistenzsystem verfügbar ist.

Die DE 10 2004 005 815 B3 beschreibt ein Kraftfahrzeug mit mehreren ein- und ausschaltbaren Systemen zur Unterstützung des Fahrers. Dabei kann in einem Kombinationssymbol angezeigt werden, welche der Fahrerassistenzsysteme aktiviert sind.

Zudem beschreibt die DE 10 2014 018 364 A1 eine Vorrichtung zur Unterstützung eines Fahrers. Dabei werden insbesondere andere vor und hinter dem Fahrzeug befindliche Fahrzeuge ermittelt.

Schließlich beschreibt die DE 10 2013 008 357 A1 ein Fahrerassistenzsystem für ein Fahrzeug mit mehreren Fahrerassistenzmodulen und einer Anzeigevorrichtung. Auf der Anzeigevorrichtung werden Anzeigeelemente generiert, die eine integrierte Darstellung der von den regelnden Fahrerassistenzmodulen gelieferten Daten anzeigen.

Der vorliegenden Erfindung liegt die Aufgabe zugrunde, ein Verfahren und eine Vorrichtung bereitzustellen, mittels welchen es möglich ist, Fahrzeuginsassen umfassender über die Funktionalität von zumindest teilweise automatisch durchführbaren Fahrzeugmanövern zu informieren und dadurch das Vertrauen in die Durchführung dieser Fahrmanöver zu erhöhen. Erfindungsgemäß wird diese Aufgabe durch ein Verfahren mit den Merkmalen des Anspruchs 1 und einer Vorrichtung mit den Merkmalen des Anspruchs 13 gelöst. Vorteilhafte Ausgestaltungen und Weiterbildungen ergeben sich aus den abhängigen Ansprüchen.

Bei dem erfindungsgemäßen Verfahren werden Daten zur Umgebung des Fahrzeugs erfasst. Aus den Daten zur Umgebung wird ermittelt, ob das Fahrmanöver bei der momentanen Position des Fahrzeugs durchführbar ist. Es wird ein erstes graphisches Objekt erzeugt und auf einer Anzeigefläche angezeigt, welches signalisiert, ob das Fahrmanöver durchführbar ist.

Ein Fahrmanöver wird insbesondere dann als durchführbar eingestuft, wenn kein Verbot für die Ausführung des gewünschten Fahrmanövers vorliegt. Die Information hierzu wird aus den Daten zur Umgebung des Fahrzeugs gewonnen. Weiterhin wird ein Fahrmanöver dann als durchführbar eingestuft, wenn es gefahrlos möglich ist, das Fahrmanöver auszuführen. Eine Gefahr, durch welche es verhindert wird, dass das Fahrmanöver durchgeführt wird, geht beispielsweise von einem anderen Verkehrsteilnehmer aus.

Durch das erfindungsgemäße Verfahren werden die Fahrzeuginsassen umfassender über die Funktionalität automatisch oder teilautomatisch ausgeführter Fahrmanöver informiert, so dass das Vertrauen in und die Akzeptanz für die Durchführung dieser Fahrmanöver vorteilhafterweise erhöht werden. Diese können dann intuitiv, schnell und einfach erfassen, ob ein Fahrmanöver überhaupt durchgeführt werden kann. Ist dies nicht der Fall, führt eine Aktivierung des Fahrmanövers zunächst nicht dazu, dass das Fahrmanöver sofort ausgeführt wird. Durch die Anzeige wird dies den Fahrzeuginsassen verdeutlicht.

Das Fahrmanöver ist insbesondere ein Spurwechsel oder ein Überholvorgang. Wird ein Überholvorgang auf einer Straße mit lediglich einer Fahrspur pro Fahrtrichtung ausgeführt, setzt sich der Überholvorgang aus zwei Spurwechseln zusammen. Ein Spurwechsel bzw. ein Überholvorgang ist dann nicht durchführbar, wenn bei der momentanen Position des Fahrzeugs ein Überholverbot vorliegt. Weiterhin kann ein Überholvorgang als nicht durchführbar eingestuft werden, wenn eine bestehende Geschwindigkeitsbegrenzung überschritten werden muss. Hierzu wird aus den Daten zur Umgebung zusätzlich die Geschwindigkeit eines vorausfahrenden Verkehrsteilnehmers erfasst und die zum Überholen des vorausfahrenden Verkehrsteilnehmers benötigte Geschwindigkeit ermittelt. Weiterhin wird ein Spurwechsel dann als nicht durchführbar eingestuft, wenn ein sich von hinten näherndes Fahrzeug auf der Spur, auf die gewechselt werden soll, einen vorbestimmten Abstand zum eigenen Fahrzeug einnimmt. Der Spurwechsel kann erst dann durchgeführt werden, wenn das sich von hinten nähernde Fahrzeug das eigene Fahrzeug überholt hat.

In einer Ausgestaltung wird das erste graphische Objekt in einer ersten Darstellungsweise dargestellt, wenn ermittelt wurde, dass das Fahrmanöver durchführbar ist, und in einer zweiten Darstellungsweise dargestellt, wenn ermittelt wurde, dass das Fahrmanöver nicht durchführbar ist. Dabei kann das erste graphische Objekt in der zweiten Darstellungsweise hervorgehoben dargestellt werden. Die Hervorhebung kann dabei beispielsweise durch einen Farbwechsel des ersten graphischen Objekts realisiert werden. Weiterhin kann das erste graphische Objekt in der ersten Darstellungsweise weiß oder grün dargestellt werden. In der zweiten Darstellungsweise kann das erste graphische Objekt dann orange oder rot angezeigt werden. Durch die unterschiedliche Darstellungsweise können die Fahrzeuginsassen vorteilhafterweise leicht einen Wechsel in der Durchführbarkeit erkennen.

Das erste graphische Objekt kann beispielsweise eine graphische Fahrbahnmarkierung umfassen. Dabei wird das erste graphische Objekt in der ersten Darstellungsweise als unterbrochene Fahrbahnmarkierung und in der zweiten Darstellungsweise als durchgezogene Fahrbahnmarkierung angezeigt. Hierdurch kann vorteilhafterweise ein Bezug zur Realität hergestellt werden. Zwar müssen reale Fahrbahnmarkierungen nicht in allen Situationen, in denen ein Fahrmanöver nicht durchführbar ist, tatsächlich durchgezogene Linien sein. Wenn jedoch eine reale Fahrbahnmarkierung durchgezogen ist, bedeutet dies, dass ein Spurwechsel nicht durchgeführt werden darf. Den Fahrzeuginsassen kann hierdurch auf reale Art und Weise dargestellt werden, ob ein Fahrmanöver gerade durchführbar ist oder nicht. Es wird daher vorteilhafterweise eine Darstellung verwendet, mit welcher die Fahrzeuginsassen bereits vertraut sind.

Erfindungsgemäss wird ein zweites graphisches Objekt erzeugt und auf der Anzeigefläche angezeigt, welches das Fahrzeug repräsentiert. Vorteilhaft wird die Durchführbarkeit des Fahrmanövers in eine Richtung ausgehend von dem Fahrzeug ermittelt. Das erste graphische Objekt wird dann auf der in der ermittelten Richtung liegenden Seite des zweiten graphischen Objekts angezeigt. Hierdurch wird dem Fahrer angezeigt, ob das gewünschte Fahrmanöver zu einer gewünschten Seite durchgeführt werden kann. Auf einer Autobahn darf ein Überholvorgang beispielsweise lediglich über eine links von dem zu überholenden Fahrzeug liegenden Spur durchgeführt werden. Es wird in diesem Fall daher ermittelt, dass nach rechts kein Überholvorgang möglich ist. Das erste graphische Objekt wird dann auf der rechten Seite des zweiten graphischen Objekts als durchgezogene Fahrbahnmarkierung angezeigt. Auf der linken Seite des zweiten graphischen Objekts wird hingegen eine unterbrochene Fahrbahnmarkierung dargestellt, wenn der Überholvorgang nach links durchführbar ist.

In einer Ausgestaltung wird das Fahrmanöver einer Fahrmanöverfunktion zugeordnet. Es wird ein Signal erfasst, mittels welchem die Fahrmanöverfunktion aktiviert wird. Weiterhin wird ein drittes graphisches Objekt erzeugt, welches anzeigt, das die Fahrmanöverfunktion aktiv ist. Wenn ermittelt wurde, dass das Fahrmanöver durchführbar ist, wird das Fahrmanöver automatisch durchgeführt. Dabei wird das Signal insbesondere dadurch ausgelöst, dass eine Betätigung eines Betätigungselements erfasst wird. Das Betätigungselement kann dabei beispielsweise der Blinkerhebel des Fahrzeugs sein. Dieser wird beispielsweise von einem Fahrer des Fahrzeugs betätigt. Dies bedeutet, dass das Fahrmanöver vom Fahrer initiiert wird, vom Fahrzeug jedoch automatisch durchgeführt wird. Insbesondere entscheidet das Fahrzeug, wann das Fahrmanöver durchgeführt wird. Das Signal dient lediglich dazu, dem Fahrzeug zu signalisieren, dass das Fahrmanöver zum nächstmöglichen Zeitpunkt durchgeführt werden soll. Durch die Erzeugung des dritten graphischen Objekts kann sich der Fahrer dann vorteilhafterweise sicher sein, dass das Fahrzeug die Betätigung des Betätigungselements auch tatsächlich erfasst hat und die Fahrmanöverfunktion nun aktiv ist. Weiterhin kann der Fahrer dadurch, dass er die Fahrmanöverfunktion selbst aktiviert, Einfluss auf den Betrieb eines zumindest teilweise autonom fahrenden Fahrzeugs nehmen. Zudem wird das Fahrmanöver auch dann tatsächlich durchgeführt, wenn ermittelt wird, dass es durchführbar ist.

Zudem kann aus dem Signal eine Soll-Richtung ermittelt werden, in welche das Fahrmanöver durchgeführt werden soll. Erst zu Beginn des automatisch durchgeführten Fahrmanövers wird ein Lichtsignal mit einer Blinkervorrichtung des Fahrzeugs auf der Seite des Fahrzeugs erzeugt, die in der ermittelten Soll-Richtung liegt. Betätigt der Fahrer also den Blinkerhebel, um zunächst das Signal zur Aktivierung der Fahrmanöverfunktion auszulösen, wird der Blinker des Fahrzeugs nicht automatisch gleichzeitig mit aktiviert. Vielmehr wird dieser nur dann gleichzeitig mit aktiviert, wenn das Fahrmanöver bei der momentanen Position des Fahrzeugs durchführbar ist und automatisch durchgeführt wird. Wird hingegen ermittelt, dass das Fahrmanöver bei der momentanen Position des Fahrzeugs nicht durchführbar ist, wird der Blinker zunächst nicht aktiviert. Der Blinker wird also vorteilhafterweise erst zu Beginn der Fahrmanöverdurchführung aktiviert. Hierdurch kann insbesondere verhindert werden, dass ein blinkender Blinker eines Fahrzeugs zu einer Verwirrung bei anderen Verkehrsteilnehmern, beispielsweise bei gerade das Fahrzeug überholenden Verkehrsteilnehmern, führt. Zudem kann die Richtung, in welche das Fahrmanöver durchgeführt werden soll, aus der Betätigung des Betätigungselements ermittelt werden. Hat der Fahrer beispielsweise den Blinkerhebel derart betätigt, dass die Blinker des Fahrzeugs auf der rechten Seite aktiviert werden, wird daraus ermittelt, dass das Fahrmanöver zur rechten Seite durchgeführt werden soll. Wurde der Blinkerhebel jedoch derart betätigt, dass die Blinker des Fahrzeugs auf der linken Seite aktiviert werden, wird ermittelt, dass das Fahrmanöver zur linken Seite durchgeführt werden soll. Hierdurch unterscheidet sich das Fahrmanöver nicht von einem manuell vom Fahrer durchgeführten Fahrmanöver, welches in der Regel damit beginnt, dass der Blinker in eine Richtung, in welche das Fahrmanöver ausgeführt werden soll, gesetzt wird.

In einer weiteren Ausgestaltung wird, wenn das Fahrmanöver bei der momentanen Position nicht durchführbar ist, eine Position ermittelt, bei welcher das Fahrmanöver durchführbar ist. Es wird dann ein viertes graphisches Objekt auf der Anzeigefläche erzeugt, welches die Position anzeigt, bei welcher das Fahrmanöver voraussichtlich durchgeführt wird. Hat der Fahrer die Fahrmanöverfunktion aktiviert, wird ihm hierdurch vorteilhafterweise angezeigt, wann das gewünschte Fahrmanöver voraussichtlich durchgeführt wird. Die Fahrzeuginsassen werden nicht von einem plötzlich beginnenden Fahrmanöver überrascht.

Weiterhin kann das vierte graphische Objekt auf der in der ermittelten Soll-Richtung liegenden Seite des zweiten graphischen Objekts angezeigt werden. Hierdurch wird dem Fahrer angezeigt, in welche Richtung das gewünschte Fahrmanöver zu einer gewünschten Seite beginnen wird.

In einer weiteren Ausgestaltung wird eine Trajektorie für das Fahrmanöver prognostiziert. Es wird dann der Verlauf der prognostizierten Trajektorie auf der Anzeigefläche angezeigt. Dabei kann die Anzeige der Trajektorie mit dem vierten graphischen Objekt kombiniert werden. Hierdurch können die Fahrzeuginsassen nicht nur erfassen, bei welcher Position das Fahrmanöver durchgeführt wird, sondern auch die erwartete Trajektorie für das Fahrmanöver abschätzen. Dadurch kann sichergestellt werden, dass die Fahrzeuginsassen bei der Ausführung des Fahrmanövers nicht überrascht werden.

Die Daten zur Umgebung umfassen dabei insbesondere Fahrbahnmarkierungen, Verkehrsschilder und/oder andere Verkehrsteilnehmer. Werden Fahrbahnmarkierungen erfasst, wird insbesondere die Ausgestaltung der Fahrbahnmarkierungen erfasst. Bei einer durchgezogenen Fahrbahnmarkierung ist ein Spurwechsel nicht erlaubt. Ein Fahrmanöver wird demnach als nicht durchführbar eingestuft. Weiterhin können beispielsweise Verkehrsschilder, die ein Überholverbot oder eine Geschwindigkeitsbegrenzung anzeigen, erfasst werden. Im Falle eines Überholverbotes, kann ein Überholvorgang erst dann durchgeführt werden, wenn ein erneutes Verkehrsschild erfasst wird, mit welchem das Überholverbot aufgehoben wird. Bei einer erfassten Geschwindigkeitsbegrenzung kann ein Überholvorgang dann nicht durchgeführt werden, wenn dabei die Geschwindigkeitsbegrenzung überschritten werden müsste. Weiterhin kann ein Spurwechsel dann nicht durchgeführt werden, wenn ein sich von hinten näherndes Fahrzeug auf der Spur, auf die gewechselt werden soll, erfasst wird, welches aufgrund seines Abstandes zu dem Fahrzeug eine Gefahr bei einem Spurwechsel darstellen würde.

Erfindungsgemäss wird um das zweite graphische Objekt herum ein fünftes graphisches Objekt erzeugt. Wenn ein anderer Verkehrsteilnehmer erfasst wird, wird die Position des anderen Verkehrsteilnehmers relativ zu dem Fahrzeug durch das fünfte graphische Objekt angezeigt. Dabei ist das fünfte graphische Objekt insbesondere als geschlossene Kurve ausgebildet, wobei die Position des erfassten Verkehrsteilnehmers dadurch anzeigt wird, dass ein Teil der geschlossenen Kurve, bei welchem sich der Verkehrsteilnehmer befindet, hervorgehoben dargestellt wird. Insbesondere kann zudem ein sechstes graphisches Objekt für den erfassten Verkehrsteilnehmer erzeugt werden. Durch diese Darstellung wird der Fahrer vorteilhafterweise sofort darauf aufmerksam gemacht, wenn sich von hinten ein anderer Verkehrsteilnehmer nähert. Der Fahrer kann sofort erfassen, warum das gewünschte Fahrmanöver momentan nicht durchführbar ist. Die Akzeptanz teilautomatischer Fahrzeugfunktionen wird dadurch erhöht. Die Erfindung betrifft ferner eine Vorrichtung zum Anzeigen einer Durchführbarkeit eines zumindest teilweise automatisch durchführbaren Fahrmanövers in einem Fahrzeug. Die Vorrichtung umfasst eine Erfassungseinheit zum Erfassen von Daten zur Umgebung des Fahrzeugs. Weiterhin umfasst die Vorrichtung eine Ermittlungseinheit, mittels welcher aus den Daten zur Umgebung ermittelbar ist, ob bei der momentanen Position des Fahrzeugs das Fahrmanöver durchführbar ist. Die Vorrichtung umfasst zudem eine Steuervorrichtung und eine Anzeigeeinheit. Die Anzeigeeinheit ist von der Steuervorrichtung derart ansteuerbar, dass auf einer Anzeigefläche der Anzeigeeinheit ein erstes graphisches Objekt angezeigt wird, welches signalisiert, ob das Fahrmanöver durchführbar ist. Die Vorrichtung ist insbesondere dazu ausgestaltet das erfindungsgemäße Verfahren auszuführen und weist daher alle Vorteile des Verfahrens auf.

Weiterhin betrifft die Erfindung ein Fahrzeug mit einer erfindungsgemäßen Vorrichtung.

Die Erfindung wird nun anhand von Ausführungsbeispielen mit Bezug zu den Zeichnungen erläutert.
- Figur 1: zeigt ein Ausführungsbeispiel für eine erfindungsgemäße Vorrichtung,
- Figur 2: zeigt ein Flussdiagramm für ein Ausführungsbeispiel des erfindungsgemäßen Verfahrens,
- Figur 3: zeigt eine erste Anzeige,

- Figur 4: zeigt eine zweite Anzeige,
- Figur 5: zeigt eine dritto von dem erfindungsgemäßen Verfahren erzeugbare Anzeige und
- Figur 6: zeigt eine weitere von dem Verfahren erzeugbare Anzeige.

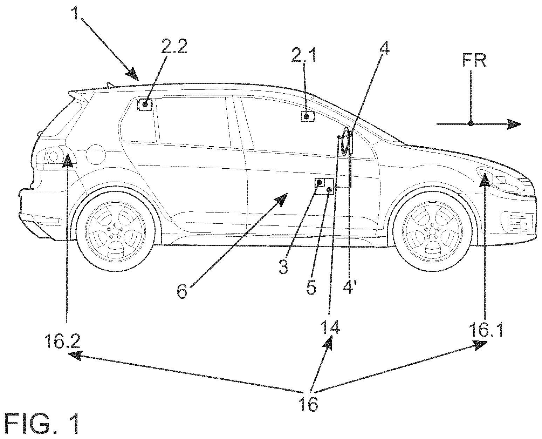

Mit Bezug zu Figur 1 wird ein erstes Ausführungsbeispiel für eine erfindungsgemäße Vorrichtung 6 erläutert, die in einem Fahrzeug 1 angeordnet ist.

Das Fahrzeug 1 kann dabei teilautonom oder vollautonom betrieben werden. Das Fahrzeug 1 weist eine Fahrmanöverfunktion auf, mit welcher Fahrmanöver automatisch durchgeführt werden können. In einem teilautonomen Betrieb des Fahrzeugs wird die Fahrmanöverfunktion von einem Fahrzeuginsassen aktiviert. Das Fahrmanöver wird dann jedoch automatisch durchgeführt, ohne dass ein Eingreifen eines Fahrzeuginsassen notwendig ist. Zudem kann auch das Fahrmanöver derart durchgeführt werden, dass lediglich die Lenkaufgabe beim Fahrzeug liegt. Die Geschwindigkeitsregelung hingegen kann vom Fahrer selbst übernommen werden.

Ein von der Fahrmanöverfunktion umfasstes Fahrmanöver ist dabei beispielsweise ein Spurwechsel und/oder ein Überholvorgang.

Die Vorrichtung 6 umfasst eine erste 2.1 und eine zweite Erfassungseinheit 2.2. Die Erfassungseinheiten 2.1 und 2.2 sind dabei beispielsweise als Kameras ausgestaltet. Die erste Kamera 2.1 ist dabei bezüglich der Fahrtrichtung FR nach vorne ausgerichtet. Die zweite Kamera 2.2 ist bezüglich der Fahrtrichtung FR nach hinten ausgerichtet. Die Kameras 2.1 und 2.2 sind dazu ausgestaltet Daten aus der Umgebung des Fahrzeugs 1 zu erfassen. Dadurch, dass die erste Kamera 2.1 nach vorne und die zweite Kamera 2.2 nach hinten ausgerichtet ist, kann ein großer Bereich der Umgebung des Fahrzeugs 1 erfasst werden. Weiterhin können zusätzliche am Fahrzeug 1 angeordnete Sensoren, wie beispielsweise Radarsensoren, Infrarotsensoren und/oder Ultraschallsensoren, zur Erfassung der Fahrzeugumgebung verwendet werden.

Die Vorrichtung 6 umfasst weiterhin eine Anzeigeeinheit 4 mit einer Anzeigefläche 4`. Die Anzeigeeinheit 4 kann dabei in der Mittelkonsole des Fahrzeugs 1 angeordnet sein. Alternativ kann die Anzeigeeinheit 4 auch in einem Kombinationsinstrument des Fahrzeugs 1 angeordnet sein. Zudem kann die Vorrichtung 6 auch mehrere Anzeigeeinheiten 4 mit Anzeigeflächen 4' umfassen.

Die Anzeigeeinheit 4 ist mit einer Steuervorrichtung 5 verbunden. In der Steuervorrichtung 5 wiederum ist eine Ermittlungseinheit 3 angeordnet. Die Daten der Kameras 2.1 und 2.2 werden an die Ermittlungseinheit 3 übermittelt und dort weiter verarbeitet. Die Anzeigeeinheit 4 wird von der Steuervorrichtung 5 in Abhängigkeit von den Daten zur der Umgebung des Fahrzeugs 1 derart angesteuert, dass eine Anzeige auf der Anzeigefläche 4' angezeigt wird, mittels welcher vom Fahrer erfassbar ist, ob ein Fahrmanöver, das beispielsweise ein Spurwechsel oder ein Überholvorgang ist, bei der momentanen Position des Fahrzeugs 1 durchführbar ist.

Weiterhin umfasst die Vorrichtung 6 eine Blinkervorrichtung 16, die ein Betätigungselement 14 und die vorderen Blinker 16.1 und die hinteren Blinker 16.2 des Fahrzeugs 1 umfasst. Das Betätigungselement 14 ist dabei ein Blinkerhebel, der in der Regel bei einem Lenkrad des Fahrzeugs 1 angeordnet ist. Weiterhin dient der Blinkerhebel 14 dazu, die Fahrmanöverfunktion zu aktivieren.

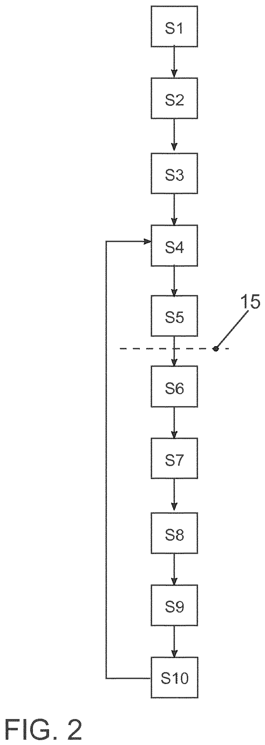

Mit Bezug zu den Figuren 2, 3 und 4 wird ein Ausführungsbeispiel für ein erfindungsgemäßes Verfahren sowie Anzeigen, die von dem Verfahren erzeugt werden können, erläutert. Das Verfahren kann von der vorstehend beschriebenen Vorrichtung 6 ausgeführt werden.

Ausgangssituation ist dabei, dass das Fahrzeug 1 auf einer Landstraße fährt. Dabei weist die Landstraße pro Fahrtrichtung eine Fahrspur auf. Als Fahrmanöver soll in dieser Situation ein Überholvorgang durchführbar sein.

In Schritt S1 des Verfahrens werden zunächst Daten zur Umgebung des Fahrzeugs 1 mittels der Kameras 2.1 und 2.2 erfasst.

In Schritt S2 wird aus den Daten zur Umgebung ermittelt, dass ein Überholvorgang problemlos durchgeführt werden könnte. Dabei wurden insbesondere keine Verkehrsteilnehmer erfasst, die bei einem Überholvorgang eine Gefahr für das Fahrzeug 1 darstellen. Zudem wurden auch keine Verkehrsschilder oder durchgezogene Fahrbahnmarkierungen erfasst, die ein Verbot für einen Überholvorgang anzeigen.

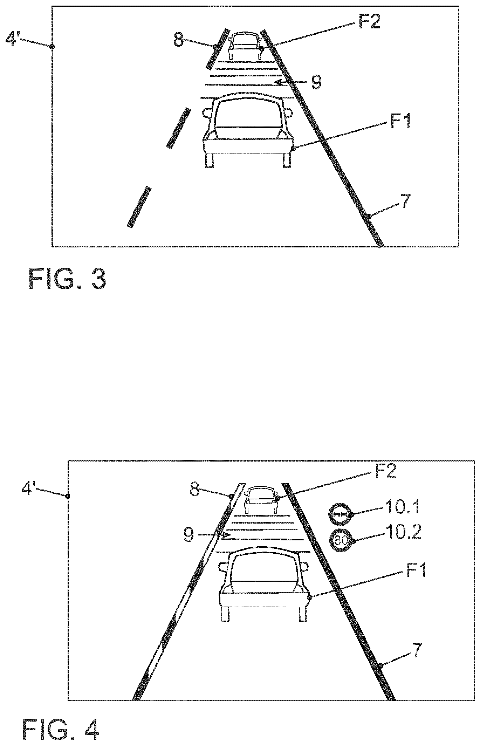

In Schritt S3 wird daraufhin die in Figur 3 gezeigte Anzeige angezeigt. Als Anzeige wird auf der Anzeigefläche 4` ein graphisches Objekt F1 für das eigene Fahrzeug 1, ein sogenanntes Ego-Fahrzeug, angezeigt. Weiterhin wird ein graphisches Objekt F2 für ein vor dem Fahrzeug 1 erfasstes Fahrzeug auf der Anzeigefläche 4' erzeugt. Weiterhin werden die graphischen Objekte 7 und 8 erzeugt, welche dem Fahrer anzeigen, in welche Richtung ein Überholvorgang beginnen kann. Das graphische Objekt 7 stellt dabei eine durchgezogene Fahrbahnmarkierung dar. Hierdurch wird dem Fahrer angezeigt, dass ein Spurwechsel nach rechts nicht durchführbar ist. Denn rechts von dem Fahrzeug befindet sich keine weitere Fahrspur. Das graphische Objekt 8 wird als unterbrochene Fahrbahnmarkierung angezeigt. Dadurch, dass die Fahrbahnmarkierung unterbrochen dargestellt wird, wird wie bei realen Fahrbahnmarkierungen dem Fahrer angezeigt, dass ein Spurwechsel bei der momentanen Position nach links durchführbar ist.

Weiterhin werden vor dem Ego-Fahrzeug Abstandslinien 9 angezeigt, welche Teil eines Abstandswarnsystems sind. Ist der erfasste Verkehrsteilnehmer, welcher durch das graphische Objekt F2 repräsentiert wird, dem Fahrzeug 1 näher als ein vorbestimmter Abstand, wird eine Abstandswarnung ausgegeben.

Durch diese Anzeige wird dem Fahrer angezeigt, ob und in welche Richtung bei der momentanen Position ein Überholvorgang beginnen kann. Bei einer Aktivierung der Fahrmanöverfunktion würde der Überholvorgang nach links durchgeführt werden.

In Schritt S4 werden weiterhin Daten zur Umgebung des Fahrzeugs 1 erfasst. Dabei werden beispielsweise von der Kamera 2.1 zwei Verkehrsschilder erfasst. Eines dieser Verkehrsschilder zeigt dabei ein Überholverbot und das zweite Verkehrsschild eine Geschwindigkeitsbegrenzung auf 80 km/h an. Hieraus wird ermittelt, dass ein Überholvorgang aufgrund des gesetzlichen Verbotes bei der momentanen Position des Fahrzeugs 1 nicht durchführbar ist.

Die Anzeige wird in Schritt S5 daraufhin derart verändert, dass zunächst graphische Repräsentationen 10.1 und 10.2 der Verkehrsschilder erzeugt werden. Weiterhin wird die Darstellungsweise der graphischen Fahrbahnmarkierung 8 verändert. Die Fahrbahnmarkierung 8 wird nun durchgezogen dargestellt. Weiterhin wird die Fahrbahnmarkierung 8 im Vergleich zur Fahrbahnmarkierung 7 in einer anderen Farbe hervorgehoben dargestellt. Dadurch wird dem Fahrer verdeutlicht dargestellt, dass das Fahrzeug 1 zur linken Seite momentan keinen Spurwechsel und somit keinen Überholvorgang durchführen kann.

Weiterhin wird mit Bezug zu Figur 2 ein erstes Ausführungsbeispiel für eine Weiterführung des Verfahrens anschließend an Schritt S5 des Verfahrens erläutert.

Betätigt der Fahrer des Fahrzeugs 1 den Blinkerhebel 14 des Fahrzeugs 1, wird in Schritt S6 ein Signal erzeugt. Mit diesem Signal wird dem Fahrzeug 1 angezeigt, dass die Fahrmanöverfunktion nun aktiviert ist. Dabei wird insbesondere erfasst, dass der Fahrer den Blinkerhebel nach unten gedrückt hat. Der Überholvorgang soll daher nach links ausgeführt werden.

Wie bereits in Schritt S4 ermittelt, ist bei der momentanen Position des Fahrzeugs 1 ein Spurwechsel und somit ein Überholvorgang nicht durchführbar. Es werden daher die linken Blinker 16.1 und 16.2 des Fahrzeugs 1 zunächst nicht aktiviert.

In Schritt S7 wird erfasst, dass das Überholverbot und die Geschwindigkeitsbegrenzung auf 80 km/h in beispielsweise 500 m aufgehoben werden.

Bei Erreichen der Position, bei welcher das Überholverbot und die Geschwindigkeitsbegrenzung auf 80 km/h aufgehoben werden, ist dann ein Spurwechsel und somit der Überholvorgang durchführbar. In Schritt S8 wird die Anzeige der Figur 3 wieder hergestellt.

Weiterhin werden bei Erreichen dieser Position in Schritt S9 die linken Blinker 16.1 und 16.2 aktiviert. Hierdurch wird anderen Verkehrsteilnehmern angezeigt, dass das Fahrzeug 1 nun einen Spurwechsel nach links durchführt.

In Schritt S10 wird der Überholvorgang damit begonnen, dass das Fahrzeug 1 auf die entgegengesetzt verlaufende Fahrspur links neben dem zu überholenden Verkehrsteilnehmer wechselt. Vor dem zu überholenden Verkehrsteilnehmer wird das Fahrzeug 1 zum Abschließen des Überholvorgangs wieder auf die ursprüngliche Fahrspur einscheren.

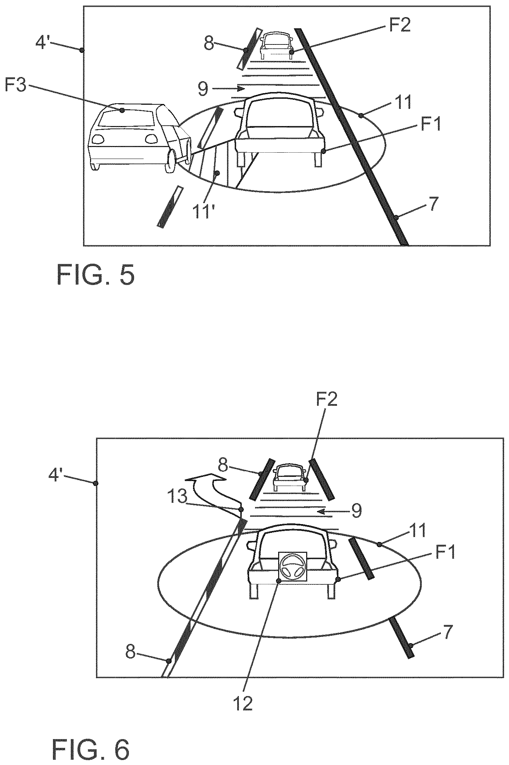

Wird in Schritt S7 erfasst, dass das Überholverbot aufgehoben wurde, die Geschwindigkeitsbegrenzung jedoch nach wie vor gilt, wird zunächst die Geschwindigkeit des vorausfahrenden Fahrzeugs ermittelt. Muss für einen Überholvorgang die Geschwindigkeit von 80 km/h überschritten werden, bleibt die Anzeige der Figur 5 derart bestehen, dass die graphische Fahrbahnmarkierung 8 durchgezogen dargestellt wird. Auch in diesem Fall ist der Überholvorgang nicht durchführbar. Muss die Geschwindigkeit von 80 km/h nicht überschritten werden, wird die Anzeige der Figur 3 wieder hergestellt. In diesem Fall kann der Überholvorgang durchgeführt werden.

Weiterhin kann ein Überholvorgang auch dann als nicht durchführbar eingestuft werden, wenn erfasst wird, dass ein Wiedereinscheren auf die ursprüngliche Fahrspur nicht möglich ist. Dies ist beispielsweise der Fall, wenn ein entgegenkommender Verkehrsteilnehmer erfasst wird, der die Position des Fahrzeugs 1 auf der entgegenkommenden Fahrspur erreicht, bevor das Fahrzeug 1 wieder einscheren kann. Weiterhin kann erfasst werden, dass eine unterbrochene Fahrbahnmarkierung in eine durchgezogen Fahrbahnmarkierung übergeht, bevor der Überholvorgang abgeschlossen werden kann.

Mit Bezug zu Figur 5 wird eine weitere Anzeige erläutert, die auf der Anzeigefläche 4' erzeugt werden kann.

Ausgangssituation ist hierbei, dass das Fahrzeug 1 auf einer Autobahn fährt, die in jeder Fahrtrichtung drei Fahrspuren aufweist. Dabei befindet sich das Fahrzeug 1 auf der rechten Fahrspur der Autobahn. Es wird wiederum die in Figur 3 gezeigte Anzeige angezeigt. Dadurch, dass die Fahrbahnmarkierung 7 als durchgezogene Fahrbahnmarkierung angezeigt wird, wird dem Fahrer dargestellt, dass ein Spurwechsel nach rechts nicht möglich ist. Dort befindet sich lediglich die Standspur, auf die nur gewechselt werden darf, wenn sie explizit zum befahren freigegeben wurde. Im vorliegenden Ausführungsbeispiel ist die Standspur nicht zum Befahren freigegeben.

In Schritt S4 des Verfahrens wird anstelle der Verkehrszeichen ein sich von hinten näherndes Fahrzeug erfasst. Dabei wird dieses Fahrzeug auf der mittleren Fahrspur der Autobahn, also in der Fahrspur links neben dem Fahrzeug 1, erfasst. Ab einem gewissen Abstand zum Fahrzeug 1 ist ein gefahrloser Spurwechsel für das Fahrzeug 1 nicht mehr möglich. Das autonom fahrende Fahrzeug 1 würde bei einer aktiven Fahrmanöverfunktion in diesem Fall einen Spurwechsel nicht durchführen.

Um dies dem Fahrer anzuzeigen wird in Schritt S5 des Verfahrens die Fahrbahnmarkierung 8 im Vergleich zur Darstellungsweise der Fahrbahnmarkierung 8 aus Figur 3 hervorgehoben dargestellt. Es wird insbesondere die Farbe der graphischen Fahrbahnmarkierung 8 verändert. Wurde diese in einer ersten Darstellungsweise, die sich auf ein durchführbares Fahrmanöver bezieht, beispielsweise in weiß dargestellt, wird sie in einer zweiten Darstellungsweise, die sich auf ein nicht durchführbares Fahrmanöver bezieht, in orange dargestellt. Dadurch wird der Fahrbahnmarkierung 8 ein Warncharakter verliehen, der dem Fahrer anzeigt, dass das Fahrmanöver nicht durchführbar ist. Die Fahrbahnmarkierung 8 wird jedoch weiterhin unterbrochen dargestellt. Dies soll dem Fahrer anzeigen, dass kein generelles Verbot für einen Spurwechsel vorliegt, sondern dass der Spurwechsel aufgrund einer vorübergehenden Gefahr nicht durchgeführt werden würde.

Um dem Fahrer detaillierter darüber zu informieren, warum ein Spurwechsel nicht möglich ist, wird weiterhin ein graphisches Objekt F3 für das Fahrzeug erzeugt, das sich von links hinten nähert. Zudem wird ein graphisches Objekt 11 erzeugt, welches eine Positionsmarkierung für das sich nähernde Fahrzeug darstellt. Das graphische Objekt 11 ist als geschlossene Ellipsenkurve ausgestaltet, die um das Ego-Fahrzeug F1 herum positioniert ist. Dabei wird ein Teil 11' der Ellipsenkurve 11 bei der Position des graphischen Objekts F3 hervorgehoben dargestellt. Das Teil 11' ist dabei insbesondere ein Segment der Ellipsenkurve 11.

Das graphische Objekt 11 kann zudem bereits in der Anzeige der Figur 3 angezeigt werden. Wird kein sich von hinten näherndes Fahrzeug erfasst wird, wird kein Segment 11' der Ellipsenkurve 11 hervorgehoben dargestellt.

Die im Vorgang beschriebenen Anzeigen zeigen dabei vorteilhafterweise auch dann an, ob ein Spurwechsel bzw. Überholvorgang durchgeführt werden kann, wenn die Fahrmanöverfunktion nicht aktiviert wurde. Dies bedeutet, dass bereits im Voraus zu einer Funktionsaktivierung angezeigt wird, ob ein der Fahrmanöverfunktion zugeordnetes Fahrmanöver überhaupt durchgeführt werden kann. Solange das Fahrmanöver nicht durchführbar ist, muss der Fahrer die Fahrmanöverfunktion auch nicht aktivieren. Dies führt zudem zu einer höheren Akzeptanz automatisch arbeitender Fahrfunktionen in einem zumindest teilweise autonom fahrenden Fahrzeug.

Mit Bezug zu den Figuren 2 und 6 werden ein zweites Ausführungsbeispiel für eine Weiterführung des erfindungsgemäßen Verfahrens nach Schritt S5 und eine von dieser Weiterführung erzeugte Anzeige erläutert.

Ausgangssituation hierbei ist wiederum, dass das Fahrzeug 1 auf einer dreispurigen Autobahn fährt. Dabei ist das Fahrzeug 1 auf der mittleren der drei Fahrspuren unterwegs. Die links von dem Fahrzeug 1 liegende Fahrspur ist dabei ein Autobahnzubringer, der bei der momentanen Position des Fahrzeugs 1 durch eine reale durchgezogene Fahrbahnmarkierung von der mittleren Fahrspur abgetrennt ist.

Es wird in Schritt S4 erfasst, dass die links von dem Fahrzeug 1 liegende Fahrbahnmarkierung durchgezogen ist. Ein Spurwechsel bei der momentanen Position des Fahrzeugs 1 nach links ist daher nicht möglich ist. Ein Spurwechsel nach rechts hingegen ist bei der momentanen Position des Fahrzeugs 1 möglich.

Es wird daher in Schritt S5 rechts von dem Ego-Fahrzeug 4 eine unterbrochene Fahrbahnmarkierung 7 und links von dem Ego-Fahrzeug 4 eine durchgezogene Fahrbahnmarkierung 8 erzeugt.

Der Fahrer drückt den Blinkerhebel 14 wieder nach unten. Es wird ein Signal erzeugt, welches anzeigt, dass die Fahrmanöverfunktion aktiviert wurde. Dieses Signal wird in Schritt S6 erfasst. Die Fahrmanöverfunktion wird aktiviert. Zudem wird aus dem Signal eine Soll-Richtung ermittelt, in welche das Fahrmanöver ausgeführt werden soll. Durch das Drücken des Blinkerhebels 14 nach unten, wird ermittelt, dass das Fahrmanöver nach links durchgeführt werden soll.

Zunächst wird in Schritt S7 auf der Anzeigefläche 4` ein graphisches Objekt 12 erzeugt, mittels welchem angezeigt wird, dass die Fahrmanöverfunktion aktiviert wurde. Das graphische Objekt 12 stellt dabei eine graphische Repräsentation eines Lenkrads dar. Durch das graphische Objekt 12 wird dem Fahrer angezeigt, dass die Aktivierung der Fahrmanöverfunktion vom Fahrzeug 1 erfasst wurde. Der Fahrer kann dann sicher gehen, dass das gewünschte Fahrmanöver sobald wie möglich durchgeführt wird.

In Schritt S8 wird die dem Fahrzeug 1 nächstliegende Position ermittelt, bei welcher der angeforderte Spurwechsel möglich ist. Es wird beispielsweise erfasst, dass die reale durchgezogene Fahrbahnmarkierung in 200 m in eine unterbrochene reale Fahrbahnmarkierung übergeht. Der Spurwechsel ist daher in 200 m durchführbar. Weiterhin wird in Schritt S8 eine Trajektorie für den Spurwechsel prognostiziert, welcher das Fahrzeug 1 zur Ausführung des Spurwechsels wahrscheinlich folgen wird.

Es wird in Schritt S9 ein graphisches Objekt 13 in Form eines Pfeils auf der Anzeigefläche 4' erzeugt. Die Position des graphischen Objekts 13 wird dabei derart relativ zu dem Ego-Fahrzeug F1 auf der Anzeigefläche 4` positioniert, dass dem Fahrer die Position angezeigt wird, bei welcher der Überholvorgang beginnen wird. Die Anfangsposition des Spurwechsels ist dabei durch den Pfeilbeginn des Pfeils 13 angedeutet. Der weitere Verlauf des Pfeils 13 stellt die prognostizierte Trajektorie dar. Zudem wird das graphische Objekt 13 auf der linken Seite des Ego-Fahrzeugs F1 erzeugt, da ermittelt wurde, dass der Spurwechsel nach links erfolgen soll.

Weiterhin wird das graphische Objekt 8 derart erzeugt, dass es ab der Position, ab welcher der Spurwechsel wieder durchgeführt werden kann, wie die reale Fahrbahnmarkierung in eine unterbrochen dargestellte graphische Fahrbahnmarkierung 8 übergeht.

Hat das Ego-Fahrzeug F1 die Position erreicht, an welcher der Pfeilbeginn des Pfeils 13 angezeigt wird, werden in Schritt S10 zunächst die linken Blinker 16.1 und 16.2 aktiviert, so dass ein Blinksignal nach links erzeugt wird. Hierdurch wird anderen Verkehrsteilnehmern angezeigt, dass das Fahrzeug 1 nun einen Spurwechsel nach links durchführt. Weiterhin wird in Schritt S10 der Spurwechsel tatsächlich durchgeführt.

An Schritt S10 schließt sich wieder der Schritt S4 des Verfahrens an, bei welchem die Daten zur Umgebung erfasst werden.

Weiterhin sind alle erläuterten Anzeigen miteinander kombinierbar oder können ineinander übergehen. Dies bedeutet, dass die Anzeige des graphischen Objekts 11 bei jeder der erläuterten Anzeigen dargestellt werden kann. Die Position eines erfassten Verkehrsteilnehmers, der sich von hinten nähert, kann jederzeit durch ein hervorgehoben dargestelltes Segment der Ellipsenkurve 11 angezeigt werden. Insbesondere kann die Ellipsenkurve 11 in jeder der erläuterten Anzeigen um das Ego-Fahrzeug F1 herum angezeigt werden.

Weiterhin kann auch dann, wenn erfasst wird, dass das Fahrmanöver durchführbar ist und beispielsweise die Anzeige aus Figur 3 auf der Anzeigefläche 4' erzeugt wird, der Fahrer den Blinkerhebel betätigen, so dass die Fahrmanöverfunktion aktiviert wird. Das Fahrmanöver wird dann sofort durchgeführt.

Durch die Trennlinie 15 in Figur 2 wird zudem dargestellt, dass die Verfahrensschritte S1 bis S5 alleinstehend durchgeführt werden können. Dies bedeutet, dass eine Aktivierung der Fahrmanöverfunktion nicht notwendig ist, um die Anzeigen der Figuren 3 bis 5 zu erzeugen.

### Bezugszeichenliste

- 1: Fahrzeug
- 2.1, 2.2: Erfassungseinheit; Kamera
- 3: Ermittlungseinheit
- 4: Anzeigeeinheit
- 4`: Anzeigefläche
- 5: Steuervorrichtung
- 6: Vorrichtung
- 7 - 13: graphische Objekte
- 14: Betätigungselement; Blinkerhebel
- 15: Trennlinie
- 16: Blinkervorrichtung
- 16.1, 16.2: Blinker
- F1: graphisches Objekt; Ego-Fahrzeug
- F2, F3: graphische Objekte ; Repräsentationen anderer Verkehrsteilnehmer
- S1 - S9: Verfahrensschritte

## Patentansprüche

1. Verfahren zum Anzeigen einer Durchführbarkeit eines zumindest teilweise automatisch durchführbaren Fahrmanövers in einem Fahrzeug (1), bei dem
Daten zur Umgebung des Fahrzeugs (1) erfasst werden,
aus den Daten zur Umgebung ermittelt wird, ob das Fahrmanöver bei der momentanen Position des Fahrzeugs (1) durchführbar ist,
ein erstes graphisches Objekt (7, 8) erzeugt und auf einer Anzeigefläche (4') angezeigt wird, welches signalisiert, ob das Fahrmanöver durchführbar ist,
ein zweites graphisches Objekt (F1) erzeugt und auf der Anzeigefläche (4') angezeigt wird, welches das Fahrzeug (1) repräsentiert,
um das zweite graphische Objekt (F1) herum ein fünftes graphisches Objekt (11) erzeugt wird, und,
wenn ein anderer Verkehrsteilnehmer erfasst wird, die Position des anderen Verkehrsteilnehmers relativ zu dem Fahrzeug (1) durch das fünfte graphische Objekt (11) angezeigt wird.

2. Verfahren nach Anspruch 1,
**dadurch gekennzeichnet, dass**
das Fahrmanöver ein Spurwechsel oder ein Überholvorgang ist.

3. Verfahren nach Anspruch 1 oder 2,
**dadurch gekennzeichnet, dass**
das erste graphische Objekt (7, 8) in einer ersten Darstellungsweise dargestellt wird, wenn ermittelt wurde, dass das Fahrmanöver durchführbar ist, und in einer zweiten Darstellungsweise dargestellt wird, wenn ermittelt wurde, dass das Fahrmanöver nicht durchführbar ist.

4. Verfahren nach Anspruch 3,
**dadurch gekennzeichnet, dass**
das erste graphische Objekt (8) eine graphische Fahrbahnmarkierung umfasst, wobei die graphische Fahrbahnmarkierung in der ersten Darstellungsweise als unterbrochene Fahrbahnmarkierung (7, 8) dargestellt wird und in der zweiten Darstellungsweise als durchgezogene Fahrbahnmarkierung (7, 8) angezeigt wird.

5. Verfahren nach einem der vorhergehenden Ansprüche,
**dadurch gekennzeichnet, dass**
die Durchführbarkeit des Fahrmanövers in eine Richtung ausgehend von dem Fahrzeug (1) ermittelt wird, und
das erste graphische Objekt (7, 8) auf der in der ermittelten Richtung liegenden Seite des zweiten graphischen Objekts (F1) angezeigt wird.

6. Verfahren nach einem der vorhergehenden Ansprüche,
**dadurch gekennzeichnet, dass**
das Fahrmanöver einer Fahrmanöverfunktion zugeordnet ist,
ein Signal erfasst wird, mittels welchem die Fahrmanöverfunktion aktiviert wird,
ein drittes graphisches Objekt (12) erzeugt wird, welches anzeigt, dass die Fahrmanöverfunktion aktiv ist, und,
wenn ermittelt wurde, dass das Fahrmanöver durchführbar ist, das Fahrmanöver automatisch durchgeführt wird.

7. Verfahren nach Anspruch 6,
**dadurch gekennzeichnet, dass**
das Signal dadurch ausgelöst wird, dass eine Betätigung eines Betätigungselements (14) erfasst wird.

8. Verfahren nach Anspruch 6 oder 7,
**dadurch gekennzeichnet, dass**
aus dem Signal eine Soll-Richtung ermittelt wird, in welche das Fahrmanöver durchgeführt werden soll, und
erst zu Beginn des automatisch durchgeführten Fahrmanövers ein Lichtsignal mit einer Blinkervorrichtung (16) des Fahrzeugs (1) auf der Seite des Fahrzeugs (1) erzeugt wird, die in der ermittelten Soll-Richtung liegt.

9. Verfahren nach einem der Ansprüche 6 bis 8,
**dadurch gekennzeichnet, dass**,
wenn das Fahrmanöver bei der momentanen Position nicht durchführbar ist, eine Position ermittelt wird, bei welcher das Fahrmanöver durchführbar ist, und
ein viertes graphisches Objekt (13) auf der Anzeigefläche (4') erzeugt wird, welches die Position anzeigt, bei welcher das Fahrmanöver voraussichtlich durchgeführt wird.

10. Verfahren nach Anspruch 9,
**dadurch gekennzeichnet, dass**
das vierte graphische Objekt (13) auf der in der ermittelten Soll-Richtung liegenden Seite des zweiten graphischen Objekts (F1) angezeigt wird.

11. Verfahren nach einem der vorhergehenden Ansprüche,
**dadurch gekennzeichnet, dass**
eine Trajektorie für das Fahrmanöver prognostiziert wird und der Verlauf der prognostizierten Trajektorie auf der Anzeigefläche (4') angezeigt wird.

12. Verfahren nach einem der vorhergehenden Ansprüche ,
**dadurch gekennzeichnet, dass**
das fünfte graphische Objekt (11) als geschlossene Kurve ausgebildet ist, wobei die Position des erfassten Verkehrsteilnehmers dadurch anzeigt wird, dass ein Teil (11') der geschlossenen Kurve (11), bei welchem sich der Verkehrsteilnehmer befindet, hervorgehoben dargestellt wird.

13. Vorrichtung (6) zum Anzeigen einer Durchführbarkeit einer zumindest teilweise automatisch durchführbaren Fahrmanövers in einem Fahrzeug (1), mit
einer Erfassungseinheit (2.1, 2.2) zum Erfassen von Daten zur Umgebung des Fahrzeugs (1),
einer Ermittlungseinheit (3), mittels welcher aus den Daten zur Umgebung ermittelbar ist, ob bei der momentanen Position des Fahrzeugs (1) das Fahrmanöver durchführbar ist und ein anderer Verkehrsteilnehmer erfassbar ist,
einer Steuervorrichtung (5) und
einer Anzeigeeinheit (4), die von der Steuervorrichtung (5) ansteuerbar ist wobei die Steuervorrichtung (5) ausgelegt ist, die Anzeigevorrichtung derart anzusteuern, dass auf einer Anzeigefläche (4') der Anzeigeeinheit (4) ein erstes graphisches Objekt (7 8) angezeigt wird, welches signalisiert, ob das Fahrmanöver durchführbar ist, ein zweites graphisches Objekt (F1) erzeugt und auf der Anzeigefläche (4') angezeigt wird, welches das Fahrzeug (1) repräsentiert, um das zweite graphische Objekt (F1) herum ein fünftes graphisches Objekt (11) erzeugt wird, und, wenn ein anderer Verkehrsteilnehmer erfasst wird, die Position des anderen Verkehrsteilnehmers relativ zu dem Fahrzeug (1) durch das fünfte graphische Objekt (11) angezeigt wird.

14. Fahrzeug (1) mit einer Vorrichtung (6) nach Anspruch 13.

## Claims

1. Method for displaying the feasibility of a driving manoeuvre which can be carried out at least partially automatically in a vehicle (1), in which
data on the surroundings of the vehicle (1) are collected,
from the data on the surroundings it is determined whether the driving manoeuvre can be carried out at the instantaneous position of the vehicle (1),
a first graphic object (7, 8) which signals whether the driving manoeuvre can be carried out is generated and displayed on a display area (4'),
a second graphic object (F1) which represents the vehicle (1) is generated and displayed on the display area (4'),
a fifth graphic object (11) is generated around the second graphic object (F1), and
if another road user is sensed, the position of the other road user is displayed relative to the vehicle (1) by means of the fifth graphic object (11).

2. Method according to Claim 1,
**characterized in that**
the driving manoeuvre is a lane change or an overtaking manoeuvre.

3. Method according to Claim 1 or 2,
**characterized in that**
the first graphic object (7, 8) is displayed in a first display mode if it has been determined that the driving manoeuvre can be carried out, and is displayed in a second display mode if it has been determined that the driving manoeuvre cannot be carried out.

4. Method according to Claim 3,
**characterized in that**
the first graphic object (8) comprises a graphic roadway marking, wherein the graphic roadway marking is displayed as an interrupted roadway marking (7, 8) in the first display mode, and is displayed as a continuous roadway marking (7, 8) in the second display mode.

5. Method according to one of the preceding claims, **characterized in that**
the feasibility of the driving manoeuvre in a direction proceeding from the vehicle (1) is determined, and
the first graphic object (7, 8) is displayed on the side of the second graphic object (F1) lying in the determined direction.

6. Method according to one of the preceding claims, **characterized in that**
the driving manoeuvre is assigned to a driving manoeuvre function,
a signal by means of which the driving manoeuvre function is activated is sensed,
a third graphic object (12) which displays that the driving manoeuvre function is active is generated, and
if it has been determined that the driving manoeuvre can be carried out, the driving manoeuvre is carried out automatically.

7. Method according to Claim 6,
**characterized in that**
the signal is triggered by virtue of the fact that actuation of an actuation element (14) is sensed.

8. Method according to Claim 6 or 7,
**characterized in that**
a setpoint direction in which the driving manoeuvre is to be carried out is determined from the signal, and
a light signal with a flashing indicator light device (16) of the vehicle (1) is not generated on the side of the vehicle (1) lying in the determined setpoint direction until the start of the driving manoeuvre which is carried out automatically.

9. Method according to one of Claims 6 to 8, **characterized in that**
if the driving manoeuvre cannot be carried out at the instantaneous position, a position at which the driving manoeuvre can be carried out is determined, and
a fourth graphic object (13) which displays the position at which the driving manoeuvre is expected to be carried out is generated on the display area (4').

10. Method according to Claim 9,
**characterized in that**
the fourth graphic object (13) is displayed on the side of the second graphic object (F1) lying in the determined setpoint direction.

11. Method according to one of the preceding claims, **characterized in that**
a trajectory is predicted for the driving manoeuvre, and the profile of the predicted trajectory is displayed on the display area (4').

12. Method according to one of the preceding claims, **characterized in that**
the fifth graphic object (11) is embodied as a closed curve, wherein the position of the sensed road user is displayed by highlighted representation of a part (11') of the closed curve (11) at which the road user is located.

13. Device (6) for displaying the feasibility of a driving manoeuvre which can be carried out at least partially automatically in a vehicle (1), having
a sensing unit (2.1, 2.2) for collecting data on the surroundings of the vehicle (1),
a determining unit (3) by means of which it can be determined from the data on the surroundings whether the driving manoeuvre can be carried out and another road user can be sensed at the instantaneous position of the vehicle (1),
a control device (5) and
a display unit (4) which can be actuated by the control device (5), wherein the control device (5) is designed to actuate the display device in such a way that a first graphic object (7, 8) which signals whether the driving manoeuvre can be carried out is displayed on a display area (4') of the display unit (4), a second graphic object (F1) which represents the vehicle (1) is generated and displayed on the display area (4'), a fifth graphic object (11) is generated around the second graphic object (F1), and, if another road user is sensed, the position of the other road user is displayed relative to the vehicle (1) by means of the fifth graphic object (11) .

14. Vehicle (1) having a device (6) according to Claim 13.

## Revendications

1. Procédé pour indiquer une aptitude à l'exécution d'une manoeuvre de conduite qui peut être exécutée au moins partiellement automatiquement dans un véhicule (1), avec lequel
des données relatives à l'environnement du véhicule (1) sont acquises,
il est déterminé, à partir des données relatives à l'environnement, si la manoeuvre de conduite est exécutable avec la position momentanée du véhicule (1), un premier objet graphique (7, 8) est généré et affiché sur une surface d'affichage (4'), lequel signal si la manoeuvre de conduite est exécutable,
un deuxième objet graphique (F1) est généré et affiché sur la surface d'affichage (4'), lequel représente le véhicule (1),
un cinquième objet graphique (11) est généré autour du deuxième objet graphique (F1), et
lorsqu'un autre usager de la route est détecté, la position de l'autre usager de la route par rapport au véhicule (1) est indiquée par le cinquième objet graphique (11).

2. Procédé selon la revendication 1,
**caractérisé en ce que**
la manoeuvre de conduite est un changement de voie ou une opération de dépassement.

3. Procédé selon la revendication 1 ou 2,
**caractérisé en ce que**
le premier objet graphique (7, 8) est représenté dans un premier mode de représentation lorsqu'il a été déterminé que la manoeuvre de conduite est exécutable, et représenté dans un deuxième mode de représentation lorsqu'il a été déterminé que la manoeuvre de conduite n'est pas exécutable.

4. Procédé selon la revendication 3,
**caractérisé en ce que**
le premier objet graphique (8) comporte un marquage graphique de la chaussée, le marquage graphique de la chaussée étant représenté, dans le premier mode de représentation, sous la forme d'un marquage de la chaussée (7, 8) discontinu et, dans le deuxième mode de représentation, sous la forme d'un marquage de la chaussée (7, 8) continu.

5. Procédé selon l'une des revendications précédentes, **caractérisé en ce que**
l'aptitude à l'exécution de la manoeuvre de conduite est déterminée dans une direction à partir du véhicule (1), et
le premier objet graphique (7, 8) est affiché sur le côté du deuxième objet graphique (F1) qui se trouve dans la direction déterminée.

6. Procédé selon l'une des revendications précédentes, **caractérisé en ce que**
une fonction de manoeuvre de conduite est associée à la manoeuvre de conduite,
un signal est acquis, au moyen duquel la fonction de manoeuvre de conduite est activée,
un troisième objet graphique (12) est généré, lequel indique que la fonction de manoeuvre de conduite est active, et
lorsqu'il a été déterminé que la manoeuvre de conduite est exécutable, la manoeuvre de conduite est exécutée automatiquement.

7. Procédé selon la revendication 6,
**caractérisé en ce que**
le signal est déclenché par le fait qu'un actionnement d'un élément d'actionnement (14) est détecté.

8. Procédé selon la revendication 6 ou 7,
**caractérisé en ce que**
une direction de consigne est déterminée à partir du signal, dans laquelle la manoeuvre de conduite doit être exécutée, et
un signal lumineux n'est généré avec un dispositif clignotant (16) du véhicule (1) sur le côté du véhicule (1) qui se trouve dans la direction de consigne déterminée qu'au début de la manoeuvre de conduite exécutée automatiquement.

9. Procédé selon l'une des revendications 6 à 8,
**caractérisé en ce que**
lorsque la manoeuvre de conduite n'est pas exécutable avec la position momentanée, une position à laquelle la manoeuvre de conduite est exécutable est déterminée, et un quatrième objet graphique (13) est généré sur la surface d'affichage (4'), lequel indique la position à laquelle la manoeuvre de conduite sera probablement exécutée.

10. Procédé selon la revendication 9,
**caractérisé en ce que**
le quatrième objet graphique (13) est affiché sur le côté du deuxième objet graphique (F1) qui se trouve dans la direction de consigne déterminée.

11. Procédé selon l'une des revendications précédentes, **caractérisé en ce que**
une trajectoire est pronostiquée pour la manoeuvre de conduite et le tracé de la trajectoire pronostiquée est affiché sur la surface d'affichage (4').

12. Procédé selon l'une des revendications précédentes, **caractérisé en ce que**
le cinquième objet graphique (11) est réalisé sous la forme d'une courbe fermée, la position de l'usager de la route détecté étant indiquée par le fait qu'une partie (11') de la courbe fermée (11), au niveau de laquelle se trouve l'usager de la route , est représentée mise en valeur.

13. Dispositif (6) pour indiquer une aptitude à l'exécution d'une manoeuvre de conduite qui peut être exécutée au moins partiellement automatiquement dans un véhicule (1), comprenant
une unité d'acquisition (2.1, 2.2) destinée à acquérir des données relatives à l'environnement du véhicule (1), une unité de détermination (3), au moyen de laquelle il peut être déterminé, à partir des données relatives à l'environnement, si la manoeuvre de conduite est exécutable avec la position momentanée du véhicule (1) et un autre usager de la route peut être détecté,
un dispositif de commande (5) et
une unité d'affichage (4), qui peut être commandée par le dispositif de commande (5)
le dispositif de commande (5) étant conçu pour commander le dispositif d'affichage de telle sorte qu'un premier objet graphique (7, 8) est affiché sur une surface d'affichage (4') de l'unité d'affichage (4), lequel signale si la manoeuvre de conduite est exécutable, un deuxième objet graphique (F1) est généré et affiché sur la surface d'affichage (4'), lequel représente le véhicule (1), un cinquième objet graphique (11) est généré autour du deuxième objet graphique (F1), et, lorsqu'un autre usager de la route est détecté, la position de l'autre usager de la route par rapport au véhicule (1) est indiquée par le cinquième objet graphique (11).

14. Véhicule (1) comprenant un dispositif (6) selon la revendication 13.
